# EUROPEAN PATENT APPLICATION

(11) **EP 1 901 537 A1**
(43) Date of publication of application: **19.03.2008**
(21) Application number: 06742097.6
(22) Date of filing: 05.06.2006
(51) Int. Cl.: H04M 11/00

(54) **GENERAL INTELLECTUAL CLICK-TO-DIAL METHOD AND THE SOFTWARE STRUCTURE THEREOF**

(30) Priority: 15.06.2005 CN 200510026789
(71) Applicant: Alcatel, 75008 Paris (FR)
(72) Inventor: YAN, Xueqiang, Pudong Jinqiao Shanghai 201206 (CN)
(74) Representative: Schäfer, Wolfgang
(86) International application number: PCT/CN2006/001211
(87) International publication number: WO 2006/133628

(57) **Abstract**

A general intelectual click-to-dial method and the software structure thereof, the software structure is installed in the user's PC, including: a configuration module for configuring the default format of a telephone number; a number acquiring module for monitoring and determining whether a user clicks the content of a text; number analysis module for determination whether the clicked content of a text is an available telephone number according to the default format of a telephone number given by the configuration module, in the case when the clicked contentof a text is an available telephone number, providing the user an access of click-to-dial; a dialing module for making a click-to-dial message, and sending the dialing message to the click-to-dial server. The present invention totally breaks the restriction of prior click-to-dial art, and not only suitable for the case when the telephone number embedded in the Web page, but also suitable for the case when the telephone number is embedded in the electronic text based on any kind of text. The present invention provides applications of high additional value to the enterprise application IP Centrex or IP PBX of VoIP.

## Description

### FIELD OF THE INVENTION

The present invention relates to a method of implementing click-to-dial by user terminals in NGN (Next-Generation Network)/VoIP (Voice over Internet Protocol) communication and a software architecture thereof.

### BACKGROUND OF THE INVENTION

Information society cannot develop without PCs (personal computers) and the Internet. People obtain a large amount of information by using PCs and accessing the Internet. However, in a large amount of document information obtained from networks or stored in PCs, telephone number is undoubtedly a greatly significant and frequently used information type. People often need to dial a telephone number that appears in e-mails, document materials or Web pages when reading the e-mails, electronic documents (MS Word, Excel, Adobe PDF) or browsing the Web pages.

Generally, when you need to dial a telephone number which is embedded in an electronic document, e-mail or Web page, a usual way is to use your desktop telephone or your mobile to complete dialing. The detailed steps comprise:
1) finding the telephone number to be dialed; and
2) entering the number manually.

However, if you let your mind wander for a single moment, a mistake will take place during such a dialing process. And the probability of making mistakes is larger especially when the dialed number is seldom used.

From the perspective of commercial applications, for example, a company publishes its service contact telephone number on a Web page in the hope of providing a contact way that prevents users from making a mistake and is used conveniently.

With the emergence of technologies such as VoIP, NGN, IP PBX, applications of these technologies receive more and more attention from people. Amongst them is click-to-dial (CTD) by which the problem described above can be solved.

However, traditional click-to-dial only applies to dialing of numbers embedded in Web pages, and it can be used by users only when this CTD service is provided by the web page owner or provider and supported by the Web server. During usage, users initiate a CTD call by clicking a preset icon or button (which is a Unified Resource Locator URL link in fact) on the Web page, the Web server rings the called and calling parties at the same time and connects two dialogues for the calling party and the called party after the calling and called parties answer the call, and then the calling and called parties can talk to each other. If the called party is a reverse charge telephone, then CTD becomes Web 800 service.

The above-described click-to-dial does not apply to those telephone numbers that are simply published on Web pages and that appear in e-mails and various documents.

Therefore, how to extend and improve click-to-dial so as to provide high value-added applications for VoIP enterprise application IP Centrex and IP PBX is also one of research subjects of the applicant.

### SUMMARY OF THE INVENTION

It is an object of the invention to provide a general intellectual click-to-dial method and a software architecture thereof so that the click-to-dial function is fulfilled for telephone numbers appearing in various types of electronic documents.

A first technical solution provided by the invention, namely a general intellectual click-to-dial method, comprises the steps of: configuring a locally-configured telephone number and a default format of telephone number; monitoring a mouse movement event to decide whether a user has selected a text content; performing number analysis on the text content selected by the user based on the configured default format of telephone number: enabling the user to select click-to-dial or to quit for a telephone number that conforms to the default format, i.e. a called number; ignoring the selected text for a telephone number that does not conform to the default format; sending a click-to-dial message to a click-to-dial server to request a call setup when the user selects click-to-dial; receiving the click-to-dial message and setting up a call between the called number and the locally-configured telephone by the click-to-dial server.

In the above general intellectual click-to-dial method, the mouse movement event may be monitored by constructing a hook function for mouse movement using system hook function of the Microsoft Windows operating system, i.e. by deciding in the hook function whether the user has selected a text content.

A second technical solution provided by the invention, namely a general intellectual click-to-dial method, comprises the steps of: configuring a locally-configured telephone number and a default format of telephone number; performing regular monitoring at set intervals to decide whether a user has selected a text content; performing number analysis on the text content selected by the user based on the configured default format of telephone number: enabling the user to select click-to-dial or to quit for a telephone number that conforms to the default format, i.e. a called number; ignoring the selected text for a telephone number that does not conform to the default format; sending a click-to-dial message to a click-to-dial server to request a call setup when the user selects click-to-dial; receiving the click-to-dial message and setting up a call between the called number and the locally-configured telephone by the click-to-dial server.

In the above two general intellectual click-to-dial methods, the click-to-dial message at least comprises the locally-configured number and the called number.

In the above two general intellectual click-to-dial methods, the locally-configured telephone number is a number carried on a fixed telephone on a desk of the user, IP telephone, SIP software telephone or any other telephone which is used by the user to receive a call.

In the above two general intellectual click-to-dial methods, the default format of telephone number is expressed by a set of regular expressions.

In the above two general intellectual click-to-dial methods, a pop-up dialogue box can be provided for the user to select click-to-dial or to quit, when the selected text content conforms to the default format of telephone number.

A third technical solution provided by the invention, namely a general intellectual click-to-dial software architecture, is installed on the PC end of a user, which is characterized by comprising a dialing module, a configuration module, a number analysis module and a number acquisition number, the dialing module being respectively connected to said configuration module and said number analysis module, and the number analysis module being further connected to said configuration module and said number acquisition module respectively, wherein the configuration module is used for configuring a locally-configured telephone number and a default format of telephone number; the number acquisition module is used for monitoring and deciding whether the user has selected a text content; the number analysis module is used for deciding telephone number validity of the text content selected by the user based on the default format of telephone number provided by said configuration module, and for providing an interface for user click-to-dial where the selected text content is a valid telephone number; and the dialing module is used for forming a click-to-dial message and sending it to a click-to-dial server.

In the above general intellectual click-to-dial software architecture, the number acquisition module monitors whether the user has selected a text content, by monitoring a mouse movement event or by performing regular monitoring at set intervals.

In the above general intellectual click-to-dial software architecture, the click-to-dial message formed by the dialing module at least comprises the locally-configured number and the called number.

In the above general intellectual click-to-dial software architecture, the locally-configured telephone number set by the configuration module is a number carried on a fixed telephone on a desk of the user, IP telephone, SIP software telephone or any other telephone which is used by the user to receive a call.

In the above general intellectual click-to-dial software architecture, the default format of telephone number configured by the configuration module is expressed by a set of regular expressions.

In the above general intellectual click-to-dial software architecture, the number acquisition module performs monitoring by constructing a hook function for a mouse movement event using system hook function of the Microsoft Windows operating system, i.e. by deciding in the hook function whether the user has selected a text content.

In the above general intellectual click-to-dial software architecture, the interface for user click-to-dial which the number analysis module provides where the selected text content is a valid telephone number is in the form of a pop-up dialogue box.

The technical solutions described previously break through the restriction of existing click-to-dial, and hence are suitable for not only the case in which telephone numbers are embedded in Web pages but also the case in which telephone numbers are embedded in any text-based electronic documents. Therefore, the invention provides high value-added applications for VoIP enterprise application IP Centrex and IP PBX.

### BRIEF DESCRIPTION ON THE DRAWINGS

Fig. 1 is a schematic view of applying the invention to IP PBX;
Fig. 2 is a block diagram of a software architecture of the invention;
Fig. 3 is a flowchart of called number analysis in the invention; and
Fig. 4 is a calling flowchart after click-to-dial in the invention when calling and called parties are both SIP telephones.

### DESCRIPTION OF THE PREFERRED EMBODIMENTS

Before a description is given to specific embodiments of the invention, i.e. an general intellectual click-to-dial method and a software architecture thereof, technical terms that are involved in the invention will be first explained:
Locally-configured number: a number carried on a telephone that is used to receive a call set up by the general intellectual click-to-dial software of the invention;
Click-to-dial user terminal: to implement a general intellectual click-to-dial method and software architecture thereof and installed on a PC of a user;
Click-to-dial server: used to receive a dial message and set up a call between the called party and the locally-configured telephone;
Dial message: a message for requesting a call setup sent by the click-to-dial user terminal to the click-to-dial server.

### Embodiment of a general intellectual click-to-dial software architecture of the invention

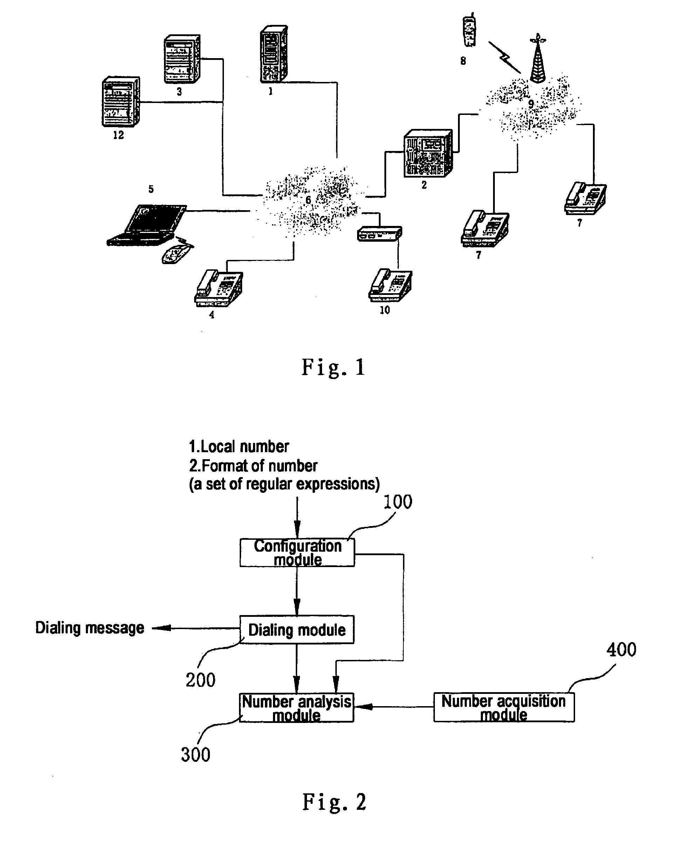

Referring to Fig. 2, a general intellectual click-to-dial software architecture which is installed on a PC of a user comprises a configuration module 100, a number acquisition module 400, a number analysis module 300, and a dialing number 200.

Configuration module 100 is used for configuring a locally-configured telephone number that can be a number carried on a fixed telephone on a table of the user, IP telephone, SIP software telephone or any other telephone which is used by the user to receive a call, and for configuring the default format of a telephone number. The default format of a telephone number can be expressed by a set of regular expressions. In this manner, users in different regions or countries can define what can be a correct format of a telephone number based on their own needs. Additionally, regular expressions are further used for separating the country code and city code of a telephone number from the telephone number per se.

For example
"\\(0\\d{2,3}\\)\\d{3,4}[-\\s]{0,1}\\d{3,4}$)|\
(\\d{2}[-\\(\\s]\\d{2}[-\\)\\s]\\d{3,4}[-\\s]{0,1}\\d{3,4}$)|\
(13\\d{9}$|)\(013\\d{9}$)|\
(0\\d{1}[124567890]{1,2}[-\\s]{0,1}\\d{3,4}[-\\s]{0,1}\\d{3,4}$)|\
(0\\d{2,3}[-\\s]{0,1}\\d{3,4}[-\\s]{0,1}\\d{3,4}$)|\
(\\d{3,4}[-\\s]{0,1}\\d{3,4])$"
denotes formats of all possible fixed or mobile telephone numbers on the Mainland of China.

For another example,
**86-21-58541240**
**5854-1240**
**13601760555**
**021-58541240**
**...**
are all qualified telephone numbers that conform to the description of regular expressions.

Number acquisition module 400 constructs a HOOK function with respect to a mouse movement event using Windows system HOOK function. It is decided in the HOOK function whether the user has selected a text content. Of course, regular detection may be implemented at set intervals to decide whether the user has selected a text content. If SelectedText in TextBox of a current window is not null, then character strings in SelectedText is passed to the number analysis module, and the number analysis function of the number analysis module is invoked.

Number analysis module 300 performs number analysis on the selected character strings using the default format of telephone number configured by the configuration module. For a telephone number that does not conform to the default format, the selected text is ignored without any operation or an error information is directly returned to the user; for a telephone number that conforms to the default format, i.e. the called number, a pop-up dialogue box having a dialing button is displayed so that the user may select click-to-dial or to quit.

Dialing module 200 is used to form a click-to-dial message and send it to the click-to-dial server. A click-to-dial message consists of a locally-configured number set by the configuration module and a called number outputted from the number analysis module, to which a user name and password can also be added for authentication.

### First embodiment of a general intellectual click-to-dial method of the invention

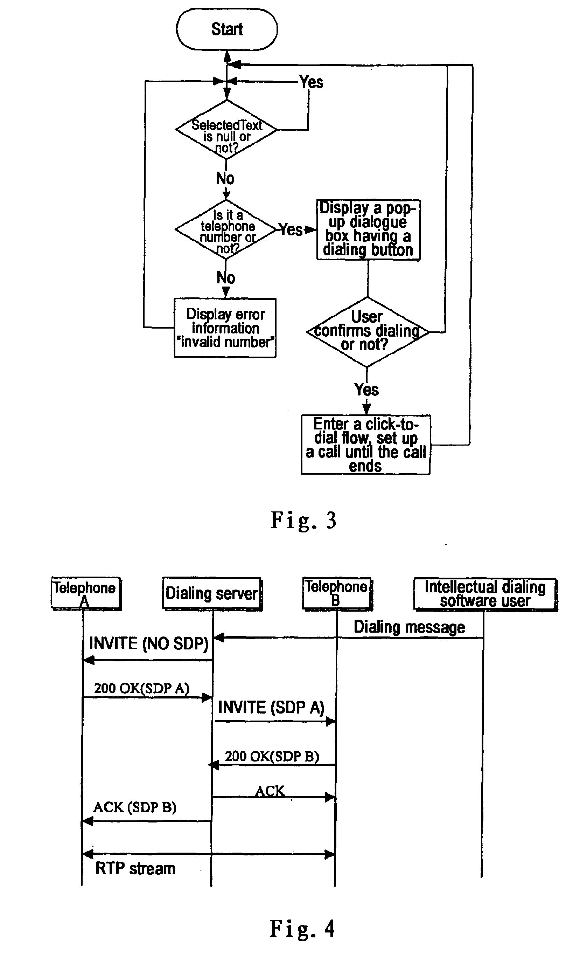

There are comprised the following steps:
The first step: configuring a locally-configured telephone number and the default format of telephone number.
The locally-configured telephone number is a number carried on a fixed telephone on a table of the user, IP telephone, SIP software telephone or any other telephone that is used by the user to receive a call.
The default format of telephone number can be expressed by a set of regular expressions, the detailed content of which is as described previously.
The second step: constructing a HOOK function with respect to a mouse movement event using Windows system HOOK function. It is decided in the HOOK function whether the user has selected a text content.
The third step: as shown in Fig. 3, if SelectedText of TextBox in a current window is not null, analyzing character strings in the SelectedText based on the configured format of telephone number: for a telephone number that does not conform to the default format, ignoring the selected text without any operation or directly displaying an error information, i.e. "invalid number," and returning it to the user; for a telephone number that conforms to the default format, i.e. a called number, displaying a pop-up dialogue box having a dialing button so that the user may select click-to-dial or quit by selecting whether to confirm dialing.
The fourth step: when the user selects click-to-dial, entering a click-to-dial flow, forming a click-to-dial message from the locally-configured number and the called number and sending it to the click-to-dial server to request a call setup, wherein a user name, password and the like may be added to the click-to-dial message.
The fifth step: receiving the click-to-dial message and setting up a call between the called party and the locally-configured telephone by the click-to-dial server until the call ends.

### Second embodiment of a general intellectual click-to-dial method of the invention

There are comprised the following steps:
The first step: configuring a locally-configured telephone number and the default format of telephone number.

The locally-configured telephone number is a number carried on a fixed telephone on a table of the user, IP telephone, SIP software telephone or any other telephone that is used by the user to receive a call.

The default format of telephone number can be expressed by a set of regular expressions, the detailed content of which is as described previously.

The second step: monitoring at set intervals to decide whether the user has selected a text content.

The third step: as shown in Fig. 3, if SelectedText of TextBox in a current window is not null, analyzing character strings in the SelectedText based on the configured format of telephone number: for a telephone number that does not conform to the default format, ignoring the selected text without any operation or directly displaying an error information, i.e. "invalid number," and returning it to the user; for a telephone number that conforms to the default format, i.e. a called number, displaying a pop-up dialogue box having a dialing button so that the user may select click-to-dial or quit by selecting whether to confirm dialing.

The fourth step: when the user selects click-to-dial, entering a click-to-dial flow, forming a click-to-dial message from the locally-configured number and the called number and sending it to the click-to-dial server to request a call setup, wherein a user name, password and the like may be added to the click-to-dial message.

The fifth step: receiving the click-to-dial message and setting up a call between the called party and the locally-configured telephone by the click-to-dial server until the call ends.

Fig. 4 shows a calling flowchart when called and locally-configured telephones are both SIP telephones. For other situation in which the called telephone is a PSTN (Public Switched Telephone Network) telephone, the main calling flow remains the same, although the participation of a gateway is need. The calling flow of Fig. 4 is a normal flow.

Telephone B is a locally-configured telephone, and telephone A is a called telephone. The detailed message stream of the calling flow is as follows:
1) forming a click-to-dial message from preset locally-configured telephone number and called number and sending it to the click-to-dial server;
2) sending, with the click-to-dial server, a SIP invitation message INVITE (excluding session description, such as speech code format etc., NO SDP) to the called party;
3)ringing the called party and sending a SIP response message 200 OK (including session description A, SDP A) to the dialing server when the called party receives the call, and initiating, with the click-to-dial server, an INVITE request (including session description A) to the locally-configured telephone;
4) ringing the locally-configured telephone and sending a 200 OK response message (including session description B, SDP B) to the dialing server after the call is answered;
5) returning, with the dialing server, a SIP acknowledgement message ACK to B;
6) sending, with the dialing server, a SIP acknowledgement message ACK (including session description B) to A;
7) A and B talking to each other.

An environment in which general intellectual click-to-dial is applied will be illustrated in the context of an example of IP PBX. As shown in Fig. 1, an IP PBX system consists of a calling server 1, an application server 3, a dialing server 12, a gateway device 2 and the like. Calling server 1 is the center of calling control of IP PBX; application server 3 comprises various applications, such as click-to-dial, instant message etc.; gateway 2 is an interconnection device for signaling and service data between the IP (Internet Protocol) and the PSTN (Public Switched Telephone Network). An IP telephone 4 and a PC 5 (on which general intellectual click-to-dial software is installed) are connected to an IP network 6 directly, and analogue telephone 10 accesses the IP network 6 via an IAD (Integrated Access Device) 11. All of them are managed by the IP PBX. A fixed telephone 7 or a mobile telephone 8 belongs to a telephone network 9. A call between the fixed telephone 7 or the mobile telephone 8 and a terminal device on the IP network 6 can be set up via the gateway device 2.

General intellectual click-to-dial is a function added on the basis of the IP PBX. And the click-to-dial server is a standard CTD application server in terms of functionality.

The user needs to install general intellectual click-to-dial user terminal software which, generally speaking, can be implemented as part of a SIP (Session Initiation Protocol) software telephone.

The user performs the following steps when using general click-to-dial:
1) the user finds the number to be dialed in a document;
2) the user selects the number to be dialed by dragging the mouse and lets the mouse stop for a suitable time, such as 1/4 second;
3) if the format of the telephone number is correct, general intellectual click-to-dial user terminal software will directly pop up a dialing window so that the user can select to dial directly or quit.

The invention can decide whether the telephone number which the user has selected by dragging the mouse is correct or not, by making comparison with the format of telephone number described by regular expressions. Additionally, the user can provide a corresponding regular expression for telephone number identification based on telephone number numbering rules of his own country and city. Furthermore, the user can select a telephone to receive calls by himself, such as a desktop telephone, mobile telephone or software telephone of the user, as long as the number is inputted to the software architecture of the invention. Therefore, the invention is intellectual and suitable for click-to-dial of telephone numbers in documents of common types (such as e-mails in Microsoft Outlook, Word, Excel, Powerpoint, Adobe PDF, Web pages etc.).

All the foregoing embodiments are by way of example of the present invention only and not intended to limit the scope of the invention, and many widely different alternations and modifications of the present invention may be made by those skilled in the art without departing from the spirit and scope of the present invention. Accordingly, all equivalent technical solutions should be included in the protection scope of the invention which is as defined in the following claims.

## Claims

1. A general intellectual click-to-dial method, comprising the steps of:
configuring a locally-configured telephone number and
a default format of telephone number;
monitoring a mouse movement event to decide whether a user has selected a text content;
performing number analysis on the text content selected by the user based on the configured default format of telephone number: enabling the user to select click-to-dial or to quit for a telephone number that conforms to the default format, i.e. a called number; ignoring the selected text for a telephone number that does not conform to the default format; sending a click-to-dial message to a click-to-dial server to request a call setup when the user selects to click-to-dial;
receiving the click-to-dial message and setting up a call between the called number and the locally-configured telephone by the click-to-dial server.

2. The method according to claim 1, **characterized in that** said click-to-dial message at least comprises the locally-configured number and the called number.

3. The method according to claim 1, **characterized in that** said locally-configured telephone number is a number carried on a fixed telephone on a desk of the user, IP telephone, SIP software telephone or any other telephone which is used by the user to receive a call.

4. The method according to claim 1, **characterized in that** said default format of telephone number is expressed by a set of regular expressions.

5. The method according to claim 1, **characterized in that** the mouse movement event is monitored by constructing a hook function for a mouse movement event using system hook function of the Microsoft Windows operating system, i.e. by deciding in the hook function whether the user has selected a text content.

6. The method according to claim 1, **characterized in that** a pop-up dialogue box can be provided for the user to select click-to-dial or to quit, when said selected text content conforms to the default format of telephone number.

7. A general intellectual click-to-dial method, comprising the steps of:
configuring a locally-configured telephone number and
a default format of telephone number;
performing regular monitoring at set intervals to decide whether a user has selected a text content; performing number analysis on the text content selected by the user based on the configured default format of telephone number: enabling the user to select click-to-dial or to quit for a telephone number that conforms to the default format, i.e. a called number; ignoring the selected text for a telephone number that does not conform to the default format; sending a click-to-dial message to a click-to-dial server to request a call setup when the user selects click-to-dial;
receiving the click-to-dial message and setting up a call between the called number and the locally-configured telephone by the click-to-dial server.

8. The method according to claim 7, **characterized in that** said click-to-dial message at least comprises the locally-configured number and the called number.

9. The method according to claim 7, **characterized in that** said locally-configured telephone number is a number carried on a fixed telephone on a desk of the user, IP telephone, SIP software telephone or any other telephone which is used by the user to receive a call.

10. The method according to claim 7, **characterized in that** said default format of telephone number is expressed by a set of regular expressions.

11. The method according to claim 7, **characterized in that** a pop-up dialogue box can be provided for the user to select click-to-dial or to quit, when said selected text content conforms to the default format of telephone number.

12. A general intellectual click-to-dial software architecture, which is installed on the PC end of a user, **characterized by** comprising a dialing module, a configuration module, a number analysis module and a number acquisition number, the dialing module being respectively connected to said configuration module and said number analysis module, and the number analysis module being further connected to said configuration module and said number acquisition module respectively, wherein
the configuration module is used for configuring a locally-configured telephone number and a default format of telephone number;
the number acquisition module is used for monitoring and deciding whether the user has selected a text content;
the number analysis module is used for deciding telephone number validity of the text content selected by the user based on the default format of telephone number provided by said configuration module, and for providing an interface for user click-to-dial where the selected text content is a valid telephone number; and the dialing module is used for forming a click-to-dial message and sending it to a click-to-dial server.

13. The general intellectual click-to-dial software architecture according to claim 12, **characterized in that** said number acquisition module monitors a mouse movement event.

14. The general intellectual click-to-dial software architecture according to claim 12, **characterized in that** said number acquisition module monitors whether the user has selected a text content at set intervals.

15. The general intellectual click-to-dial software architecture according to claim 12, **characterized in that** the click-to-dial message formed by said dialing module at least comprises the locally-configured number and the called number.

16. The general intellectual click-to-dial software architecture according to any one of claims 12 to 15, **characterized in that** the locally-configured telephone number set by said configuration module is a number carried on a fixed telephone on a desk of the user, IP telephone, SIP software telephone or any other telephone which is used by the user to receive a call.

17. The general intellectual click-to-dial software architecture according to any one of claims 12 to 15, **characterized in that** the default format of telephone number configured by said configuration module is expressed by a set of regular expressions.

18. The general intellectual click-to-dial software architecture according to claim 13, **characterized in that** said number acquisition module performs monitoring by constructing a hook function for a mouse movement event using system hook function of the Microsoft Windows operating system, i.e. by deciding in the hook function whether the user has selected a text content.

19. The general intellectual click-to-dial software architecture according to any one of claims 12 to 15, **characterized in that** the interface for user click-to-dial which said number analysis module provides where the selected text content is a valid telephone number is in the form of a pop-up dialogue box.
